# EUROPÄISCHE PATENTSCHRIFT

(11) **EP 1 024 304 B1**
(45) Veröffentlichungstag und Bekanntmachung des Hinweises auf die Patenterteilung: **30.10.2002**
(21) Anmeldenummer: 00101357.2
(22) Anmeldetag: 24.01.2000
(51) Int. Cl.: F16B 37/12

(54) **Gewindeeinsatz für Kunststoffteile**
Threaded insert for plastic parts
Insert taraudé pour des pièces plastiques

(30) Priorität: 28.01.1999 DE 19903254
(43) Veröffentlichungstag der Anmeldung: 02.08.2000
(73) Patentinhaber: InfraServ GmbH & Co. Höchst KG, 65926 Frankfurt am Main (DE)
(72) Erfinder: Simon, Klaus-Jürgen, 65779 Kelkheim (DE); Itter, Klaus, 61184 Karben (DE)
(74) Vertreter: Ackermann, Joachim, Dr.

(56) Entgegenhaltungen:
- EP-A- 0 297 497
- DE-U- 7 002 382
- US-A- 3 747 168
- US-A- 4 898 756
- US-A- 5 141 357

## Beschreibung

Die Erfindung betrifft einen Gewindeeinsatz, im wesentlichen in Form eines Zylinders, der an mindestens einem Ende ein Gewinde aufweist.

Solche Gewindeeinsätze sind bekannt. Sie sind aus Metall gefertigt und die Gewindebohrung ist zentrisch in dem zylinderförmigen Einsatz angeordnet. Verwendet werden sie in Platten aus Kunststoff oder Preßspan, in denen sie in Bohrungen eingesetzt sind, um diese Platten mit anderen Platten oder Formkörpern verschrauben zu können. Grund hierfür ist, daß man in die genannten Platten keine Gewinde einarbeiten kann, die den Belastungen bei Montage und Demontage und beim Gebrauch auf Dauer standhalten können. Es kann jedoch auch bei Verwendung von herkömmlichen Gewindeeinsätzen bei häufiger Montage/Demontage zum Ausreißen der Gewindeeinsätze aus den Bohrungen kommen. Die dadurch beschädigten Bohrungen in den Platten sind nicht zu reparieren, was häufig den Ersatz der gesamten Platte erfordert und unter Umständen erhebliche Kosten nach sich ziehen kann, vor allem wenn derartige Kunststoffplatten in pharmazeutischen Betrieben eingesetzt werden und im Schadensfall die Produktion unterbrochen werden muß.

Aus der DE-A-37 25 974 ist ein Einsatz für ein zumindest teilweise aus Kunststoff bestehendes Bauteil bekannt. Dieser Einsatz weist eine durchgehende Bohrung auf und ist für Formkörper, die in pharmazeutischen Betrieben eingesetzt werden, nicht geeignet, da die Bohrung nicht die erforderliche Abdichtung gegen den Austritt von Substanzen aufweist.

Aus der EP-A-297,497 ist ein Gewindeeinsatz bekannt, der in Platten eingesetzt wird und diese durchläuft. Zur Fixierung an der Platte wird dieser Gewindeeinsatz auf der Rückseite gestaucht, so dass sich ein Wulst ausbilden kann. Für Kunststoffoder Preßspanplatten kommt eine derartige Lösung nicht in Frage, da das Stauchen der Hülse die Platte beschädigen würde.

Der Erfindung lag daher die Aufgabe zugrunde, Formkörper oder Pressspanplatten mit verbesserten Gewindeeinsätzen bereitzustellen, bei denen der Nachteil des Ausreißens vermieden wird und die gleichzeitig gegenüber dem Austritt von Substanzen abgedichtet sind.

Gegenstand der Erfindung ist daher ein Formkörper (3) aus Kunststoff oder Preßspan mit mindestens einer durchgehenden Bohrung, in die ein Gewindeeinsatz (1) eingesetzt ist und die auf einer Seite mit einem Stopfen (5) oder einer den Gewindeeinsatz (1) haltenden Schraube (11) verschlossen ist, wobei der Gewindeeinsatz (1) im wesentlichen die Form eines Zylinders mit einer Zylinderachse (7) aufweist und an mindestens einem Ende ein Gewinde (4.10) aufweist, wobei das mindestens eine Gewinde (4,10) so angeordnet ist, daß seine Achse (6) exzentrisch bezogen auf die Zylinderachse (7) verläuft und wobei das mindestens eine Gewinde den Gewindeeinsatz nur teilweise durchläuft.

Besondere Ausgestaltungen sind in den Unteransprüchen offenbart.

Bevorzugt verläuft die Gewindeachse in einem Abstand parallel zur Zylinderachse, der größer als 0,5 mm besonders bevorzugt größer als 1 mm ist.

Die Erfindung beruht auf der Erkenntnis, daß das Ausreißen der herkömmlichen Gewindeeinsätze durch das Drehmoment verursacht wird, das beim Ein- oder Herausdrehen von Schrauben in den Gewindeeinsatz konzentrisch auf den Gewindeeinsatz und über diesen auf die Bohrung bzw. auf die Grenzfläche Bohrung/Gewindeeinsatz übertragen wird. Durch die exzentrische Anordnung des Gewindes wird das Drehmoment nicht mehr konzentrisch übertragen, so daß der Gewindeeinsatz in der Bohrung beim Schrauben nicht mehr zu einer Drehbewegung angeregt wird, die innerhalb der Bohrung ausgeführt werden kann.

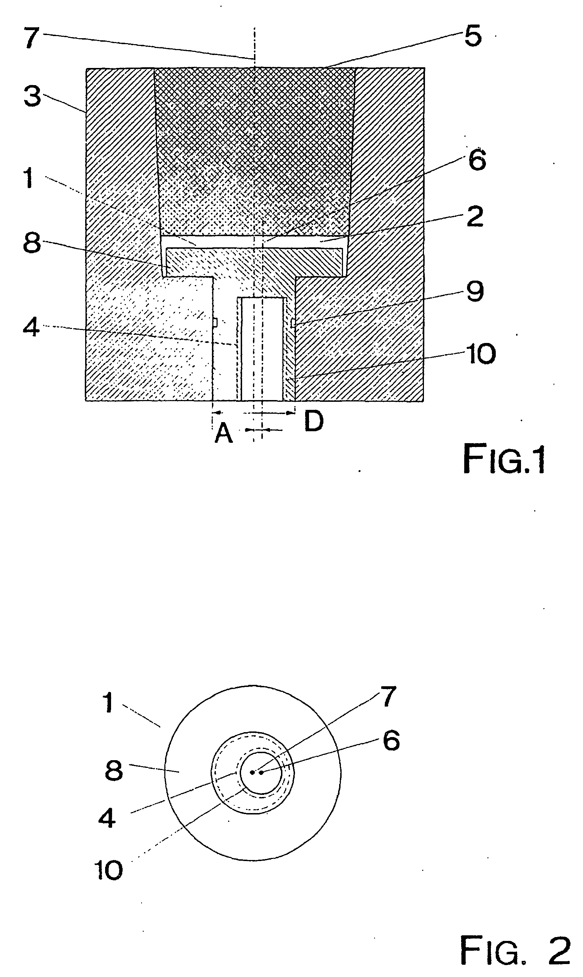

Im folgenden wird die Erfindung anhand der Zeichnungen in den Figuren 1 bis 3 näher erläutert. Eine Beschränkung der Erfindung in irgendeiner Weise ist dadurch nicht beabsichtigt.

Es zeigt
Fig. 1:eine erste Ausgestaltung eines Gewindeeinsatzes, der in eine Platte einaeschweißt ist,
Fig. 2 eine Draufsicht auf den Gewindeeinsatz aus Fig. 1 und
Fig. 3 eine zweite Ausgestaltung, bei der ein Gewindeeinsatz in eine Platte eingeschraubt ist.

In einen Formkörper 3, beispielsweise eine Platte aus Kunststoff, ist eine Bohrung 2 mit abgestuftem Durchmesser eingearbeitet. In diese Bohrung 2 ist konzentrisch zur Symmetrieachse 7 der Bohrung 2 ein erfindungsgemäßer zylindrischer Gewindeeinsatz 1 mit einem Nenndurchmesser D, üblicherweise im Bereich von 10 bis 100 mm, eingesetzt. Die Zylinderachse 7 des Gewindeeinsatzes und die Symmetrieachse der Bohrung 2 stimmen überein. Nach dem Einsetzen des Gewindeeinsatzes 1 in die Bohrung 2 wurde diese mit einem Stopfen 5 verschlossen, und dieser Stopfen 5 mit dem Formkörper 3 verschweißt, wobei bei Kunststoffteilen eine homogene Verschweißung vorteilhaft ist. Stopfen 5 und Bohrung 2 sind aufeinander abgestimmt und im Bereich der Kontaktfläche konisch ausgeführt. Der zylindrische Gewindeeinsatz 1 weist an einem Ende ein Innengewinde 10, 4 mit einer Gewindeachse 6 auf. Erfindungsgemäß verläuft die Gewindeachse 6 in einem Abstand A exzentrisch und vorzugsweise parallel zur Zylinderachse (Symmetrieachse) 7 des Gewindeeinsatzes 1 bzw. der Bohrung 2. Der zylindrische Gewindeeinsatz 1 weist an der dem Gewinde 10,4 gegenüber liegenden Seite ein Haltemittel, im gezeigten Fall einen umlaufenden Vorsprung 8 auf, der den Gewindeeinsatz 3 gegen Herausfallen aus der Bohrung 2 sichert. Eine umlaufende Nut 9 dient zur Aufnahme von Dichtringen (nicht dargestellt), die das Eindringen von Substanzen in die Bohrung 2 verhindern.

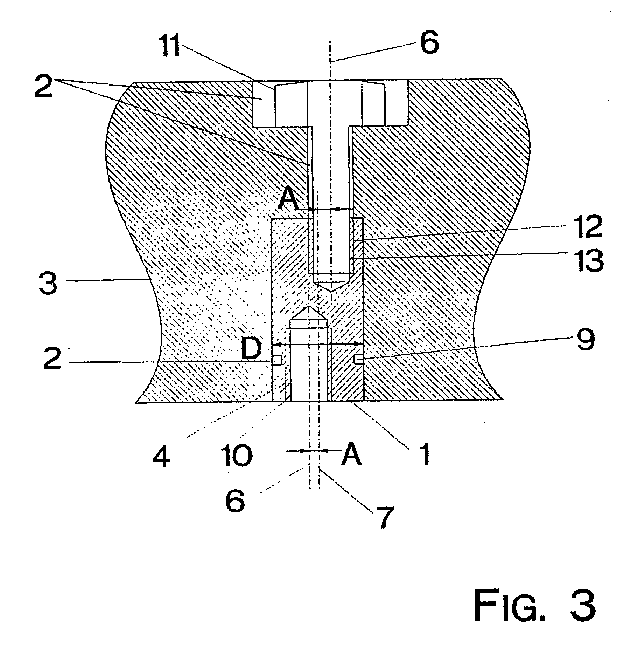

In der Ausgestaltung in Fig. 3 ist der erfindungsgemäße Gewindeeinsatz 3 mit zwei Innengewinden 4,10, 11,12 an den sich gegenüber liegenden Stirnflächen des Zylinders versehen. Der Gewindeeinsatz 1 ist in eine Bohrung 2 in der einen Oberfläche der Platte 1 eingepaßt und wird mittels einer Schraube 11 gehalten, die durch Bohrungen 2' geführt ist, und von der anderen Oberfläche der Platte 1 aus in das eine Innengewinde 12,13 des Gewindeeinsatzes 1 eingreift. Beide Innengewinde 4,10, 12,13 sind mit ihrer Gewindeachse 6 exzentrisch und vorzugsweise parallel zur Zylinderachse 7 des Gewindeeinsatzes 1 angeordnet.

Die Vorteile der Erfindung sind im wesentlichen darin zu sehen, daß ein Ausreißen der relativ zu dem Werkstoff der Platten harten Gewindeeinsätze weitestgehend vermieden wird und daß im Falle einer Beschädigung, beispielsweise durch Stoßeinwirkung, der Gewindeeinsatz problemlos ausgetauscht werden kann. Die Lebensdauer von Formkörpern enthaltend erfindungsgemäße Gewindeeinsätze wird erheblich verlängert.

## Patentansprüche

1. Formkörper (3) aus Kunststoff oder Preßspan mit mindestens einer durchgehenden Bohrung, in die ein Gewindeeinsatz (1) eingesetzt ist und die auf einer Seite mit einem Stopfen (5) oder einer den Gewindeeinsatz (1) haltenden Schraube (11) verschlossen ist, wobei der Gewindeeinsatz (1) im wesentlichen die Form eines Zylinders mit einer Zylinderachse (7) aufweist und an mindestens einem Ende ein Gewinde (4,10) aufweist, wobei das mindestens eine Gewinde (4,10) so angeordnet ist, daß seine Achse (6) exzentrisch bezogen auf die Zylinderachse (7) verläuft und wobei das mindestens eine Gewinde den Gewindeeinsatz nur teilweise durchläuft.

2. Formkörper (3) nach Anspruch 1, **dadurch gekennzeichnet, daß** die Gewindeachse (6) in einem Abstand (A) von mindestens 0,5 mm, vorzugsweise mindestens 1 mm zur Zylinderachse (7) verläuft.

3. Formkörper (3) nach Anspruch 1 oder 2, **dadurch gekennzeichnet, daß** der Gewindeeinsatz (1) an einem Ende, das dem exzentrisch angeordneten Gewinde (4, 10) gegenüberliegt, ein Halteelement (8) zur Sicherung gegen Herausnahme aus einer Bohrung (2) aufweist.

4. Formkörper (3) nach Anspruch 3, **dadurch gekennzeichnet, daß** das Halteelement ein umlaufender Vorsprung (8) ist.

5. Formkörper (3) nach Anspruch 3, **dadurch gekennzeichnet, daß** das Halteelement ein zentrisch oder exzentrisch angeordnetes Innengewinde (12, 13) ist, mit dem der Gewindeeinsatz (3) unter Verwendung einer Schraube (11) in einer Bohrung (2) befestigbar ist.

6. Formkörper (3) nach Anspruch 3, **dadurch gekennzeichnet, daß** das Halteelement ein Außengewinde ist.

7. Formkörper (3) nach Anspruch 1, **dadurch gekennzeichnet, daß** der Formkörper (3) eine Platte ist, vorzugsweise eine Kunststoffplatte.

## Claims

1. A shaped body (3) of plastic or pressboard, having at least one continuous hole into which a threaded insert (1) is inserted and which is closed on one side by a plug (5) or a screw (11) holding the threaded insert (1), the threaded insert (1) having essentially the shape of a cylinder with a cylinder axis (7) and having a thread (4, 10) on at least one end, the at least one thread (4, 10) being arranged in such a way that its axis (6) runs eccentrically relative to the cylinder axis (7), and the at least one thread passing only partly through the threaded insert.

2. The shaped body (3) as claimed in claim 1, wherein the thread axis (6) runs at a distance (A) of at least 0.5 mm, preferably at least 1 mm, from the cylinder axis (7).

3. The shaped body (3) as claimed in claim 1 or 2, wherein the threaded insert (1), at an end which is opposite the eccentrically arranged thread (4, -10), has a holding element (8) for protecting against removal from a hole (2).

4. The shaped body (3) as claimed in claim 3, wherein the holding element is an encircling projection (8).

5. The shaped body (3) as claimed in claim 3, wherein the holding element is a centrically or eccentrically arranged internal thread (12, 13), with which the threaded insert (3) can be fastened in a hole (2) using a screw (11).

6. The shaped body (3) as claimed in claim 3, wherein the holding element is an external thread.

7. The shaped body (3) as claimed in claim 1, wherein the shaped body (3) is a plate, preferably a plastic plate.

## Revendications

1. Corps moulé (3) en matière plastique ou en copeaux pressés comportant au moins une forure débouchante, dans laquelle est enfiché un insert taraudé (1) et qui est obturée sur un côté par un bouchon (5) ou une vis (11) bloquant l'insert taraudé (1), dans lequel l'insert taraudé (1) possède sensiblement la forme d'un cylindre avec un axe de cylindre (7) et comporte au moins sur une extrémité un taraudage (4, 10), dans lequel le taraudage (4, 10), au moins au nombre d'un, est disposé de telle sorte que son axe (6) s'étend excentriquement par rapport à l'axe du cylindre (7) et dans lequel au moins un taraudage s'étend seulement partiellement à travers l'insert taraudé.

2. Corps moulé (3) selon la revendication 1, **caractérisé en ce que** l'axe du taraudage (6) s'étend à une distance (A) d'au moins 0,5 mm, de préférence au moins 1 mm, de l'axe du cylindre (7).

3. Corps moulé (3) selon la revendication 1 ou 2, **caractérisé en ce que** l'insert taraudé (1), sur une extrémité opposée au taraudage (4, 10) agencé excentriquement, est muni d'un élément de retenue (8) pour l'empêcher de glisser hors d'une forure (2).

4. Corps moulé (3) selon la revendication 3, **caractérisé en ce que** l'élément de retenue est une saillie périphérique (8).

5. Corps moulé (3) selon la revendication 3, **caractérisé en ce que** l'élément de retenue est un taraudage (12, 13) agencé au centre ou excentriquement, par lequel l'insert taraudé (1) peut être bloqué dans une forure (2) au moyen d'une vis (11).

6. Corps moulé (3) selon la revendication 3, **caractérisé en ce que** l'élément de retenue est un filetage.

7. Corps moulé (3) selon la revendication 1, **caractérisé en ce que** le corps moulé (3) est un panneau, de préférence un panneau en matière plastique.
